# EUROPEAN PATENT SPECIFICATION

(11) **EP 3 167 230 B1**
(45) Date of publication and mention of the grant of the patent: **06.01.2021**
(21) Application number: 15754010.5
(22) Date of filing: 09.07.2015
(51) Int. Cl.: F24C 15/04

(54) **DOOR FOR APPARATUS TO COOK AND/OR HEAT FOOD AND CORRESPONDING PRODUCTION METHOD**
TÜR FÜR EINE VORRICHTUNG ZUM KOCHEN UND/ODER AUFWÄRMEN VON NAHRUNGSMITTELN UND ENTSPRECHENDES HERSTELLUNGSVERFAHREN
PORTE POUR APPAREIL SERVANT À CUIRE ET/OU À RÉCHAUFFER DE LA NOURRITURE, ET PROCÉDÉ DE PRODUCTION CORRESPONDANT

(30) Priority: 10.07.2014 IT UD20140119
(43) Date of publication of application: 17.05.2017
(73) Proprietor: De' Longhi Appliances S.r.l. Con Unico Socio, 31100 Treviso (IT)
(72) Inventor: DE' LONGHI, Giuseppe, I-31100 Treviso (IT); BISETTO, Fabio, I-31056 Roncade (IT)
(74) Representative: Petraz, Davide Luigi
(86) International application number: PCT/IB2015/055205
(87) International publication number: WO 2016/005939

(56) References cited:
- EP-A2- 1 043 140
- EP-A2- 1 507 034
- EP-A2- 2 159 489
- DE-A1-102004 002 470
- DE-A1-102004 011 036
- DE-A1-102009 047 595
- US-A1- 2012 031 389

## Description

### FIELD OF THE INVENTION

The present invention concerns a door with double glazing that can be applied for example, in apparatuses to cook and/or heat food, such as for example electric cookers, ovens or other similar apparatuses, both for domestic and non-domestic use.

The present invention also concerns a method to produce said door, and also the cooking and/or heating apparatus on which the door is assembled.

### BACKGROUND OF THE INVENTION

Apparatuses for cooking and/or heating food are known, such as for example electric cookers or ovens, provided with a door, generally located on a front wall, to introduce or remove the food from an internal cooking zone.

These apparatuses normally include one or more electric resistances, activated when the apparatus is switched on, and generally disposed near one or more internal parts of a cooking and/or heating zone.

In recent years such apparatuses have been regulated by different safety laws, so as to define the maximum temperatures admissible in correspondence with the external surfaces, to prevent any burning due to contact therewith.

It is known that in correspondence with a door of the apparatuses, a great heat dispersion occurs, which can prevent the limits established by the law from being respected, since the heat propagated from inside to outside creates an increase in temperature of the external surfaces.

For this reason it is known to make the door double-glazed, or alternatively with transparent panels mounted on a frame, to reduce the heat dispersion, also allowing, at the same time, to inspect the food from outside while the apparatus is in use.

Here and hereafter in the description, the term "double-glazing" means a panel made of transparent material, not necessarily made of glass, but also of different and suitable material, such as for example polycarbonate, Plexiglas or polymethylmethacrylate.

The two panels and the frame of the door delimit an air chamber, which separates the cooking zone from the external environment, thus reducing dispersion between inside and outside the apparatus.

One disadvantage of known doors concerns the possible formation of condensation inside the chamber, due to the difference in temperature between the cooking zone and the outside environment.

The condensation can consequently be deposited in correspondence with internal surfaces of the panels of the door, thus limiting, when the apparatus is functioning, the user's view toward the cooking zone and making the apparatus in its entirety unaesthetic.

One possible solution provides to make a door in which the two panels are mounted in correspondence with a holed metal frame, which allows air to circulate, thus reducing the problem of formation of condensation.

Another disadvantage of such solutions is that fats and oils, used during the cooking of the foods, can also be deposited on the panels and can dirty the surfaces thereof.

If not removed, these substances can affect and further worsen the esthetics and visibility of the whole apparatus; they can also promote the generation of molds, fungi or other parasite organisms, causing poor hygiene conditions.

One possible solution to this problem provides to make a door in which the panels can be removed from the frame, allowing access to the chamber, so that it can be cleaned.

Another possible solution provides to make the door by making the double-glazing panels adhere to the frame using an attachment element, such as for example silicone, so as to seal them to it.

One disadvantage of this solution is that it is impossible to guarantee over time a perfect seal and impermeability of the air chamber; this consequently entails phenomena, although limited, of condensation and formation of mold, fungi or other parasite organisms.

Another disadvantage of this known solution is the high cost of making the sealing, and the additional times of the production cycle.

EP 1.043.140, DE 10 2004 002470 and EP 2.159.489 disclose doors for cooking ovens having an internal panel and an external panel defining a chamber.

One purpose of the present invention is to produce a door with a double-glazed wall, in the meaning indicated above, which prevents the formation of condensation in correspondence with the internal surfaces of the panels.

Another purpose of the present invention is to produce a door that can reduce or even prevent the deposit of fats or oils in correspondence with the surfaces of the panels.

Another purpose of the present invention is to produce a door for an apparatus that allows to obtain energy saving when cooking foods, compared with known doors.

Another purpose of the present invention is to perfect a method for the production of a double-glazed door that is easy to make, simple to implement and that does not entail increases in the production costs compared with the state of the art.

The Applicant has devised, tested and embodied the present invention to overcome the shortcomings of the state of the art and to obtain these and other purposes and advantages.

### SUMMARY OF THE INVENTION

The present invention is set forth and characterized in the independent claims, while the dependent claims describe other characteristics of the invention or variants to the main inventive idea.

In accordance with the above purposes, the present invention concerns a door for an apparatus to cook and/or heat food, which comprises at least a perimeter frame and two panels, made of an at least partly transparent material such as glass, polycarbonate (PC), Plexiglas or polymethylmethacrylate (PMMA).

The two panels, during use, are located distanced and facing each other and delimited externally, for at least a part of their perimeter, by the at least one perimeter frame, so as to form a closed chamber between them.

The perimeter frame is preferentially made of plastic material or other suitable moldable material.

In accordance with the present invention, the door comprises a perimeter frame co-molded with both the panels, disposed distanced with respect to each other to form said chamber.

With this door it is therefore possible to reduce, or even eliminate, the possibility of formation of condensation inside the chamber, since the at least one perimeter frame and the panels are disposed to form the chamber so as to guarantee a perfect seal and cohesion.

Moreover, with this door it is also possible to avoid dirtying the internal sides of the panels, at least partly transparent, which form the chamber, allowing an optimal view of the inside of the apparatus through the panels themselves.

The present invention also concerns a method to produce the door, which provides steps to supply the panels and the at least one perimeter frame and to position the panels opposite and distanced from each other to form, together with the at least one perimeter frame, a closed chamber.

According to the invention, the two panels are co-molded with the perimeter frame.

The production method of the door has the advantage that it is easily executed, with limited production costs, and can be made in series.

### BRIEF DESCRIPTION OF THE DRAWINGS

These and other characteristics of the present invention will become apparent from the following description of some forms of embodiment, given as a non-restrictive example with reference to the attached drawings wherein:
- fig. 1 is a perspective view of an apparatus with a door not part of the invention;
- fig. 2 is a lateral view in section of part of the apparatus in fig. 1;
- fig. 3 is a lateral view in section of a variant of fig. 2.

To facilitate comprehension, the same reference numbers have been used, where possible, to identify identical common elements in the drawings. It is understood that elements and characteristics of one form of embodiment can conveniently be incorporated into other forms of embodiment without further clarifications.

### DETAILED DESCRIPTION OF SOME FORMS OF EMBODIMENT

We shall now refer in detail to the various forms of embodiment of the present invention, of which one or more examples are shown in the attached drawing. Each example is supplied by way of illustration of the invention and shall not be understood as a limitation thereof. For example, the characteristics shown or described insomuch as they are part of one form of embodiment can be adopted on, or in association with, other forms of embodiment.

In accordance with the present description, the invention concerns a door 10 that can be applied in apparatuses 11 to cook and/or heat food, such as for example, but not only, electric cookers, ovens or other similar apparatuses 11, both for domestic and non-domestic use.

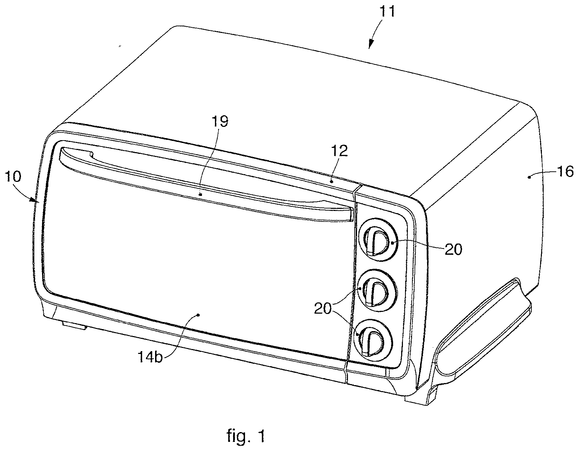

Fig. 1 is used to describe a possible application of the door 10 on the apparatus 11, in this case an electric cooker.

In particular, the door 10 can be assembled advantageously on a front surface of the apparatus 11, to facilitate the introduction and removal of food from inside it.

Moreover, to facilitate opening and/or closing the door 10, the door 10 comprises a gripping handle 19.

The door 10 can also comprise a plurality of adjustment elements 20 of the known type, in the case of fig. 1 three adjustment elements 20, configured to selectively adjust some parameters of the apparatus 11 during use, such as for example, but not only, the cooking temperature, the type of cooking, the cooking time or other similar parameters.

The apparatus 11 normally comprises one or more heating elements 17, such as for example electric resistances, selectively activated when the apparatus is switched on and normally disposed inside a cooking zone 18, in a position of proximity to one of the internal faces of walls of the apparatus 11.

In forms of embodiment described here, the door 10 comprises at least one perimeter frame 12 and two panels 14a and 14b, respectively internal and external, located distanced and facing each other.

The panels 14a and 14b are preferably made of a transparent material in order to allow to see inside the apparatus 11 with the door 10 closed.

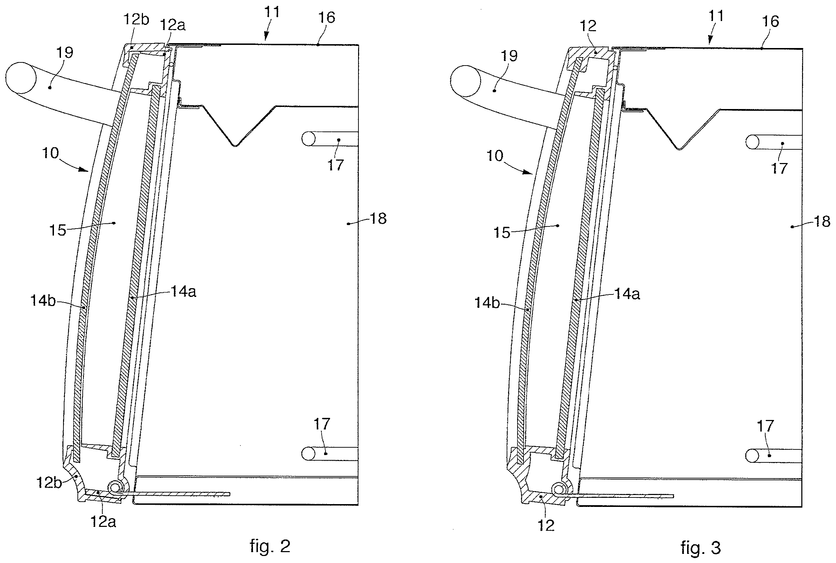

In forms of embodiment described with reference for example to fig. 2, the door 10 comprises two perimeter frames 12a and 12b, respectively internal and external, each of which is associated to one of the two panels 14a, and 14b.

In other forms of embodiment of the present invention, described for example with reference to fig. 3, the door 10 comprises a single perimeter frame 12, to which both the panels 14a and 14b are associated.

The panels 14a and 14b are delimited externally, in this case completely, by the at least one perimeter frame 12, 12a, 12b so as to define therewith a closed chamber 15, of which the panels 14a and 14b form two opposite lateral walls.

In particular, together with a body 16 of the apparatus 11, the chamber 15 defines the internal cooking zone 18, which it is possible to access by means of the door 10.

Each perimeter frame 12, 12a and 12b can advantageously be made of plastic material able to resist the increase in temperature determined during use by the heating elements 17 located in the internal cooking zone 18 of the apparatus 11 and in proximity to at least one of the internal faces of the cooking zone 18.

The plastic material can be, for example but not only, polybutylene terephthalate (PBT), polypropylene (PP), polyethylene (PE), polyethylene terephthalate (PET), polymethylmethacrylate (PMMA), polystyrene (PS) or other resistant plastic material or again, a combination thereof.

In other forms of embodiment described here, each perimeter frame 12, 12a, and 12b can be made of metal material, at least in one portion thereof, so as to advantageously reduce production costs.

The two panels 14a and 14b can be made of glass, such as tempered glass for example, low emissivity glass or other similar types, so as to guarantee sufficient resistance to the heat that develops when the apparatus 11 is in use.

In variant forms of embodiment, the two panels 14a and 14b can also be made of plastic material that, in its transparency, is similar to glass, such as for example polycarbonate (PC), Plexiglas or polymethylmethacrylate (PMMA) or other type of transparent plastic material.

In forms of embodiment described here, the two panels 14a and 14b can be made of the same material or, alternatively, each of a different material, for example when it is necessary to differentiate their resistance to heat.

According to the invention, the internal panel 14a is made of a more resistant material, since it is located near the heating elements 17 of the apparatus 11, while the external panel 14b can be made of a less resistant material, because it is farther from the heating elements 17.

Depending on the type of materials used, it is therefore possible to contain the costs associated with the production of the door 10.

In forms of embodiment described here, not part of the present invention, the door 10 is advantageously made by hot co-molding of at least one of the two panels 14a and 14b with the at least one perimeter frame 12, 12a and 12b.

In the case of fig. 2, the internal panel 14a is co-molded with the internal perimeter frame 12a, so as to define a compact structure and to obtain a perfect cohesion and seal between the two.

Thanks to the perimeter seal obtained between the internal panel 14a and corresponding internal perimeter frame 12a, the penetration of steam from inside the apparatus 11 into the closed chamber 15 is prevented, thus preventing the formation of condensation on the surfaces of the panels 14a and 14b.

In particular, after positioning the internal panel 14a in a mold, the material or mixture of materials that make up the internal perimeter frame 12a are introduced into the mold, for example by injection.

The mold is subsequently hot pressed so as to guarantee adhesion between the internal perimeter frame 12a and the internal panel 14a and, subsequently, to solidify upon it.

Finally, the second panel 14b can be attached, for example by jointing, to the external perimeter frame 12b, in turn attached to the internal perimeter frame 12a, defining the chamber 15 (fig. 2).

In this way, the chamber 15 is sealed and hermetic in its internal side, thus considerably reducing the possibility of formation of condensation when the apparatus 11 to which the door 10 is associated is in use.

The seal of the chamber 15 on the internal side also allows to reduce the heat dispersion that occurs when the apparatus 11 is in use, thus allowing to obtain energy saving for cooking and/or heating food.

Furthermore, this production mode can easily be performed in series, considerably reducing the costs associated with the production of the door 10.

This production mode is also particularly versatile because, depending on specific requirements, it is possible to make doors 10 in different types of materials.

In particular, it is possible to choose both the composition of the perimeter frames 12, 12a and 12b, and also that of the panels 14a and 14b, without changing or making modifications to the production process described above.

In other forms of embodiment described here, the external perimeter frame 12b and the external panel 14b can also be made by co-molding, as described above.

According to the present invention, with reference to fig. 3, the whole door 10 can be made by co-molding both panels 14a and 14b and the perimeter frame 12.

In this case, both the panels 14a and 14b are positioned in the mold as cited above, and subsequently the material that makes up the perimeter frame 12 is injected.

Consequently, during the hot compression operation, the material of the perimeter frame 12 adheres to both the panels 14a and 14b, solidifying on them.

This solution guarantees that the chamber 15 has hermetic characteristics both on the internal side and on the external side, guaranteeing even more that the formation of condensation is prevented on the surfaces of the panels 14a and 14b facing toward the chamber 15.

In this way, moreover, the chamber 15 is obtained directly during the co-molding process, without needing to attach the different components of the door 10 to each other.

Furthermore, in this way it is also possible to reduce the formation of molds, fungi or other parasite organisms, since the chamber 15 has less tendency to get dirty inside, because it is sealed.

It is clear that modifications and/or additions of parts may be made to the door 10 for an apparatus 11 for cooking and/or heating food, and the corresponding production method as described heretofore, without departing from the field and scope of the present invention. The scope of protection is defined as set forth in the claims.

## Claims

1. Door for apparatus (11) to cook and/or heat food, comprising at least a perimeter frame (12; 12a, 12b) and two panels (14a, 14b) made of an at least partly transparent material, an internal panel (14a) and an external panel (14b) to which a gripping handle (19) is attached for opening and closing the door (10), located distanced and facing each other and delimited externally by said at least one perimeter frame (12; 12a, 12b), so as to form a closed chamber (15), wherein at least said internal panel (14a) is co-molded with the at least one perimeter frame (12; 12a, 12b) to form an hermetic seal therebetween configured to prevent penetration of steam between the internal panel and the perimeter frame into the closed chamber (15), **characterized in that** said internal panel (14a) is made by a material that is more resistant to heat than the material of said external panel (14b), and wherein the closed chamber (15) is hermetically sealed on an internal side, and **in that** said perimeter frame (12) is co-molded with both panels (14a, 14b).

2. Door as in claim 1, **characterized in that** each panel (14a, 14b) is made of a transparent material chosen from a group comprising glass, plastic material such as polycarbonate (PC), Plexiglas or polymethylmethacrylate (PMMA).

3. Method to produce at least a door (10) for apparatus (11) to cook and/or heat food, the method providing to supply at least a perimeter frame (12; 12a, 12b) and two panels (14a, 14b), an internal panel (14a) and an external panel (14b), and to position said panels (14a, 14b) opposite and distanced from each other, delimiting them externally with the at least one perimeter frame (12; 12a, 12b), in order to form a closed chamber (15), at least one said internal panel (14a) being obtained by co-molding with the at least one perimeter frame (12; 12a, 12b) to form an hermetic seal therebetween configured to prevent penetration of steam between the internal panel and the perimeter frame into the closed chamber (15), the method further providing that the internal panel (14a) is made by a material that is more resistant to heat of the material of said external panel (14b), and wherein the step of forming the closed chamber (15) comprises hermetically sealing it on both an internal side and an external side, the method further providing to co-mold both the panels (14a, 14b) with the perimeter frame (12).

4. Apparatus to cook and/or heat food comprising a door (10) as in claim 1.

## Patentansprüche

1. Tür für eine Vorrichtung (11) zum Kochen und/oder Aufwärmen von Nahrungsmitteln, umfassend mindestens einen Umfangsrahmen (12; 12a, 12b) und zwei Platten (14a, 14b), die aus einem zumindest teilweise transparenten Material gefertigt sind, eine innere Platte (14a) und eine äußere Platte (14b), an der ein Handgriff (19) zum Öffnen und Schließen der Tür (10) befestigt ist, die im Abstand voneinander und sich gegenüberliegend angeordnet sind und außen von dem mindestens einen Umfangsrahmen (12; 12a, 12b) begrenzt werden, so dass sie eine geschlossene Kammer (15) bilden, wobei zumindest die innere Platte (14a) mit dem mindestens einen Umfangsrahmen (12; 12a, 12b) durch Co-Molding geformt ist, um eine hermetische Abdichtung dazwischen zu bilden, die so konfiguriert ist, dass sie das Eindringen von Dampf zwischen die innere Platte und den Umfangsrahmen in die geschlossene Kammer (15) verhindert, **dadurch gekennzeichnet, dass** die innere Platte (14a) aus einem Material gefertigt ist, das hitzebeständiger ist als das Material der äußeren Platte (14b), und wobei die geschlossene Kammer (15) auf einer Innenseite hermetisch abgedichtet ist, und dass der Umfangsrahmen (12) mit beiden Platten (14a, 14b) durch Co-Molding geformt ist.

2. Tür gemäß Anspruch 1, **dadurch gekennzeichnet, dass** jede Platte (14a, 14b) aus einem transparenten Material gefertigt ist, das ausgewählt ist aus der Gruppe umfassend Glas, Kunststoffmaterial, wie zum Beispiel Polycarbonat (PC), Plexiglas oder Polymethylmethacrylat (PMMA).

3. Verfahren zur Herstellung mindestens einer Tür (10) für eine Vorrichtung (11) zum Kochen und/oder Aufwärmen von Nahrungsmitteln, wobei das Verfahren umfasst: Bereitstellen mindestens eines Umfangsrahmens (12; 12a, 12b) und zweier Platten (14a, 14b), einer inneren Platte (14a) und einer äußeren Platte (14b), und Positionieren der Platten (14a, 14b) gegenüberliegend und im Abstand voneinander, wobei sie außen von dem mindestens einen Umfangsrahmen (12; 12a, 12b) begrenzt werden, um eine geschlossene Kammer (15) zu bilden, wobei zumindest die innere Platte (14a) durch Co-Molding mit dem mindestens einen Umfangsrahmen (12; 12a, 12b) erhalten wird, um eine hermetische Abdichtung dazwischen zu bilden, die so konfiguriert ist, dass sie das Eindringen von Dampf zwischen die innere Platte und den Umfangsrahmen in die geschlossene Kammer (15) verhindert, wobei in dem Verfahren eine innere Platte (14a) bereitgestellt wird, die aus einem Material gefertigt ist, das hitzebeständiger ist als das Material der äußeren Platte (14b), und wobei der Schritt des Bildens der geschlossenen Kammer (15) ihr hermetisches Abdichten sowohl auf der Innenseite als auch auf der Außenseite umfasst, wobei das Verfahren ferner das Co-Molding beider Platten (14a, 14b) mit dem Umfangsrahmen (12) umfasst.

4. Vorrichtung zum Kochen und/oder Aufwärmen von Nahrungsmitteln umfassend eine Tür (10) gemäß Anspruch 1.

## Revendications

1. Porte pour appareil (11) permettant de cuire et / ou de chauffer des aliments, comprenant au moins un cadre périphérique (12 ; 12a, 12b) et deux panneaux (14a, 14b) faits en un matériau au moins partiellement transparent, un panneau interne (14a) et un panneau externe (14b) auquel est fixée une poignée de préhension (19) pour ouvrir et fermer la porte (10), situés à distance et en regard l'un de l'autre et délimités extérieurement par ledit au moins un cadre périphérique (12 ; 12a, 12b), de manière à former une chambre fermée (15), au moins ledit panneau interne (14a) étant co-moulé avec ledit au moins un cadre périphérique (12 ; 12a, 12b) de façon à former une jonction hermétique entre eux configurée pour empêcher la pénétration de vapeur entre le panneau interne et le cadre périphérique jusque dans la chambre fermée (15), **caractérisé en ce que** ledit panneau interne (14a) est fait en un matériau qui est plus résistant à la chaleur que le matériau dudit panneau externe (14b), la chambre fermée (15) étant hermétiquement scellée sur un côté interne, et **en ce que** ledit cadre périphérique (12) est co-moulé avec les deux panneaux (14a, 14b).

2. Porte selon la revendication 1, **caractérisée en ce que** chaque panneau (14a, 14b) est réalisé en un matériau transparent choisi dans un groupe comprenant le verre, une matière plastique telle que le polycarbonate (PC), le Plexiglas ou le polyméthylméthacrylate (PMMA).

3. Procédé pour produire au moins une porte (10) pour un appareil (11) pour cuire et / ou chauffer des aliments, le procédé prévoyant de fournir au moins un cadre périphérique (12 ; 12a, 12b) et deux panneaux (14a, 14b), un panneau interne (14a) et un panneau externe (14b), et de positionner lesdits panneaux (14a, 14b) de façon opposée l'un à l'autre et distante l'un de l'autre, en les délimitant extérieurement avec ledit au moins un cadre périphérique (12 ; 12a, 12b), afin de former une chambre fermée (15), au moins un desdits panneaux internes (14a) étant obtenu par co-moulage avec ledit au moins un cadre périphérique (12 ; 12a, 12b) pour former une jonction hermétique entre eux configurée de façon à empêcher la pénétration de vapeur entre le panneau interne et le cadre périphérique jusque dans la chambre fermée (15), le procédé prévoyant en outre que le panneau interne (14a) est fait en un matériau plus résistant à la chaleur que le matériau dudit panneau externe (14b), et l'étape de formation de la chambre fermée (15) comprenant le scellement hermétique de celle-ci à la fois sur un côté interne et un côté externe, le procédé prévoyant en outre de co-mouler les deux panneaux (14a, 14b) avec le cadre périphérique (12).

4. Appareil pour cuire et / ou chauffer des aliments comprenant une porte (10) selon la revendication 1.
